# EUROPÄISCHE PATENTANMELDUNG

(11) **EP 1 818 626 A2**
(43) Veröffentlichungstag der Anmeldung: **15.08.2007**
(21) Anmeldenummer: 07102023.4
(22) Anmeldetag: 09.02.2007
(51) Int. Cl.: F24J 2/46

(54) **Solarzellen-Schneebefreiungsvorrichtung**

(30) Priorität: 09.02.2006 DE 202006002109 U
(71) Anmelder: Schneeweis, Herbert, 94360 Mittenfels (DE)
(72) Erfinder: Schneeweis, Herbert, 94360 Mittenfels (DE)
(74) Vertreter: Strych, Werner Maximilian Josef

(57) **Zusammenfassung**

Um zu verhindern, dass Solarzellen (1) im Winter von Schnee bedeckt werden und damit keinen Strom liefern, wird erfindungsgemäß vorgeschlagen, ein flächiges Abdeckelement (3) vor die Solarzellen (1) zu fahren, wenn Schneefall herrscht und danach den Schnee mit Hilfe der Abdeckung (3) von den Solarzellen (1) wegzutransportieren.

## Beschreibung

### I. Anwendungsgebiet

Die Erfindung betrifft eine Abhalte- und Reinigungsvorrichtung.

### II. Technischer Hintergrund

Dabei geht es um die Freihaltung oder anschließende Reinigung von Solarkollektoren, Solarzellen zur Stromerzeugung oder auch anderen schräg oder horizontal stehenden Flächen, etwa Flachdächern und auch Dächern von Fahrzeugen, die nicht durch groben Schmutz bedeckt werden sollen. Eine typische Grobverschmutzung ist die Ablagerung von Schnee auf diesen Flächen, aber auch von Laub oder größeren Mengen Staub in einer staubigen Umgebung.

Gerade die Ablagerung von Schnee auf solchen Flächen, die im folgenden beispielhaft ausschließlich nur noch als Solarzellen bezeichnet werden, ohne die Erfindung hierauf zu beschränken, findet meist nicht permanent, sondern nur periodisch statt:
Zum einen nur während der Winterzeit, zum anderen auch während der Winterzeit nicht permanent, sondern nur in den meist kurzen Schneefallperioden, die darüber hinaus häufig sogar zuverlässig vorab angekündigt werden und auch nur über kurze Zeiträume, manchmal nur wenige Stunden, erstrecken.
Dennoch stellen solche Schneeablagerungen für die Betreiber von Solarzellen und Sonnenkollektoren ein großes Problem dar, da sie zum einen die Sonneneinstrahlung auf die Solarzellen verhindern und damit die Stromproduktion deaktivieren, und zum anderen auch die Solarzellen unzulässigerweise mechanisch stark belasten können und zur Beschädigung führen können.
Im Folgenden wird an Stelle der freizuhaltenden bzw. zu reinigenden Flächen grundsätzlich von Solarzellen gesprochen, ohne die Erfindung auf diesen Anwendungsfall zu beschränken.
Die Betreiber haben daher ein starkes Interesse, die Ablagerungen auf Solarzellen und anderen Flächen schnell und zuverlässig zu beseitigen.
So sollen Ablagerungen großer Schneemengen auf vor allem leichtgebauten Hallendächern aus statischen Gründen vermieden werden. Das gleiche gilt beispielsweise für die Dächer von Wohnwägen, die das ganz Jahr frei stehen und die ebenfalls nicht in der Lage sind, hohe Schneelasten zu tragen.
Dies geschah in der Vergangenheit meist manuell durch Abkehren. Auch automatische Kehrvorrichtungen sind bereits bekannt, die betätigt werden können, ohne einen Bediener auf das Dach beziehungsweise die Solarzellen steigen zu lassen.
Darüber hinaus ist es auch bereits bekannt, ein Ablagern von Schnee von vornherein zu verhindern oder auch nachträglich wieder zu beseitigen, indem der Schnee abgetaut wird, beispielsweise durch Aufbringen von Salz, insbesondere in Form von Salzlake, die in flüssiger Form von der Oberkante der Solarzellen her auf diese aufgesprüht oder aufgespritzt wird. All diesen Systemen haften jedoch spezifische Nachteile an, die vermieden werden sollen.

### III. Darstellung der Erfindung

### a) Technische Aufgabe

Es ist daher die Aufgabe gemäß der Erfindung, eine Vorrichtung zu schaffen, welche trotz hoher Zuverlässigkeit einfach und kostengünstig in der Anwendung ist. Auch eine Nachrüstbarkeit durch entsprechende Bereitstellung der Teile eines Bausatzes soll auf einfache Weise möglich sein.

### b) Lösung der Aufgabe

Diese Aufgabe wird durch die Merkmale der Ansprüche 1, 9 bis 12 gelöst. Vorteilhafte Ausführungsformen ergeben sich aus den Unteransprüchen.

Der Grundgedanke der Erfindung besteht darin, dass entweder bereits zu dem Zeitpunkt, zu dem die Beschmutzung der Solarzellen mit Schnee, aber auch Laub und anderen groben Verunreinigungen, beginnt, die Vorderseite der Solarzellen mit einem z. B. flexiblen und daher auch wickelbaren, flächigen Zugelement abgedeckt ist oder danach die Beschmutzung entfernt wird.

Der Schnee lagert sich im ersten Fall nicht mehr auf den Solarzellen, sondern auf der Abdeckung in Form des flächigen Zugelementes ab und wenn der Schneefall beendet ist, wird das Zugelement weitertransportiert, vorzugsweise nach unten und dabei der darauf liegende Schnee ebenfalls nach unten transportiert und die Solarzellen dadurch vom Schnee befreit.

Im zweiten Fall wird die bereits eingetretene Verschmutzung wieder beseitigt, indem ein Gegenstand entlang der Oberseite der Solarzellen geführt wird. Vorzugsweise wird die Länge der Folie dabei nicht nur das einfache, sondern ein mehrfaches der abzudeckenden Länge der Solarzellen aufweisen.

Da das flexible, auf Zug belastbare Flächenelement , im Folgenden nur noch als Folie bezeichnet, ohne die Erfindung hierauf zu beschränken, die Solarzellen wegen deren darunter befindlicher Aufständerung auf einem Dach oder an einer Wand in der Regel nicht als Endloselement umlaufen kann, ist es auf einer Wickelrolle aufgewickelt, die sich am einen Ende der Solarzellen, z. B. unterhalb der unteren Kante, befindet, während die freie Endkante des Zugelementes direkt oder indirekt an einer gegenüberliegend, also unterhalb der Unterkante der Solarzellen, angeordneten Wickelrolle befestigt ist.

Das Zugelement kann also zwischen den beiden Wickelrollen hin und her gewickelt werden, so dass unterschiedliche Abschnitte des Zugelementes vor, also auf, den Solarzellen liegen. Statt einer Folie können auch miteinander verbundene aneinander anschließende Platten oder Lamellen verwendet werden.

Insbesondere können als bevorzugte Ausführungsformen die beiden Wickelrollen funktionsvereinigt in einer Wickelrolle sein, indem die Vorderkante des flächigen Zugelementes, meist durch eine Frontschiene verstreift, über Seile an einer Wickelrolle befestigt ist, die die gleiche Wickelrolle ist wie diejenige, auf der die Folie selbst aufgewickelt ist.

Zu diesem Zweck muss am gegenüberliegenden Ende der abzudeckenden Solarzellen lediglich eine Umlenkrolle vorhanden sein, um die die Seile herumgeführt werden, um dann auf der einzigen Wickelrolle, im Axialbereich neben dem Wickelbereich der Folie, aufgespult zu werden.

Dies hat den Vorteil, dass nur eine Rolle über eine Antriebsvorrichtung verfügen muss, während die Umlenkrolle nur drehbar gelagert sein muss.

Nachteilig an dieser Ausführung ist, dass dann normalerweise das Seil auf der Wickelrolle nicht einlagig aufgewickelt wird, sondern in mehreren Lagen übereinander, so dass sich der Wicklungsdurchmesser des Seiles ändert und in der Regel auch anders ändert als der Wicklungsdurchmesser der Folie, weshalb zwischen der Wickelrolle und der Umlenkrolle ein Längenausgleich stattfinden muss, um die Folie ständig gespannt zu halten. Dies ist notwendig, um ein Verhaken zu vermeiden und auch das Unterfahren von Wind zu minimieren.

Dieser Längenausgleich wird realisiert, indem die Umlenkrolle oder die Wickelrolle oder beide, in Richtung des jeweils anderen Elements weggerichtet, vorgespannt sind, wobei zur Vorspannung Elemente wie Gasdruckdämpfer, Federn oder gewichtsbeaufschlagte Wippen verwendet werden können.

Als solches Zugelement kann vorzugsweise einen Folie, beispielsweise bestehend aus Kunststoff, verwendet werden.

Falls zwei Wickelrollen vorhanden sind, müssen beide Wickelrollen jeweils zumindest in ihrer Aufwickelrichtung antreibbar sein, um die Folie in beide Richtungen wickeln zu können.

### Diese Grundidee ist in unterschiedlichen Varianten realisierbar:

Beispielsweise kann die Folie grundsätzlich immer dann, wenn prinzipiell eine Verschmutzung drohen könnte, vor den Solarzellen in Stellung gebracht werden, also im gesamten Herbst- und Winterzeitraum. Dann muss die Folie sehr gut lichtdurchlässig sein und darf nur einen möglichst geringen Anteil des Sonnenlichtes absorbieren, um die Wirkung der Solarzellen nicht spürbar zu beeinträchtigen.

Dies führt in aller Regel dazu, dass die Folie auch relativ dünn und damit wenig stabil beschaffen sein muss. Zusätzlich ist die Folie dann sehr lang der Einwirkung der UV-Strahlen des Sonnenlichtes ausgesetzt und wird entsprechend schnell brüchig werden und reißen.

Konstruktiv ist diese Lösung besonders einfach, da dann die vordere und hintere Endkante der Folie an jeweils einer der Wickelrollen direkt befestigt werden kann.

Auch ein automatischer Betrieb ist dann zwar möglich, aber nicht unbedingt notwendig, denn es genügt nach eingetretener Verschmutzung die Folie mittels manuellen Antriebes z. B. der unteren Wickelrolle soweit nach unten zu bewegen, bis der mit Schnee bedeckte Teil seine Schneelast an der unteren Wickelrolle abgeworfen hat und sich ein schneefreier Abschnitt der Folie auf den Solarzellen befindet.

In einer anderen Ausführungsform dient die untere Wickelrolle als Vorratsrolle, und ist vorzugsweise unterhalb der Dachunterkante angeordnet und beispielsweise direkt an den Sparrenenden des Daches befestigt, oder sogar unterhalb des Dachüberstandes geschützt befestigt. Die Wickelrollen, insbesondere die jeweilige Vorratsrolle, wird wahlweise in einem im wesentlichen geschlossenen Gehäuse untergebracht sein, in welches sich das Zugelement, etwa die Folie, durch einen Schlitz hineinbewegt, und an der Wickelrolle, insbesondere an diesem Schlitz wird vorzugsweise über die Breite der Folie hinweg gehend ein Abstreifer angeordnet sein, um an der Folie vorhandenen Schnee oder Nässe abzustreifen und nicht ins Gehäuse zwischen die Lagen miteinwickeln zu lassen, um vor allem deren festfrieren zu verhindern.

Sollte dennoch ein Festfrieren der Folie auf den Solarzellen erfolgen, kann diese unerwünschte Verbindung wieder mit Hilfe eines Trennelementes, beispielsweise eines Trennseiles, gelöst werden:

Zu diesem Zweck verläuft beispielsweise ein quer zur Bewegungsrichtung der Folie verlaufendes Seil zwischen der Folie und den Solarzellen, und kann von der oberen oder unteren Kante der Solarzellen her zwischen die zusammengefrorenen Elemente eingebracht und mittels einer Antriebsvorrichtung entlang der Solarzellen bewegt werden und dabei den zugefrorenen Spalt zwischen Solarzellen und Folie wieder öffnen.

Zusätzlich kann die untere Wickelrolle unter dem Dachüberstand geschützt untergebracht werden, was dann am unteren Ende, d. h. an der Dachunterkante, eine zusätzliche Umlenkrolle erfordert.

Als Antriebsvorrichtung können wiederum Zugseile dienen, die beispielsweise ebenfalls auf entsprechenden analogen Wickelrollen auf- und abgewickelt werden können, die sich am oberen und unteren Rand der Solarzellen befinden.

Auch ein erstes Trennelement wie eine Trennplatte, die sich über die Breite der Solarzellen hinweg erstreckt und in Führungen verläuft und ebenfalls in Längsrichtung antreibbar ist, ist vorstellbar.

Sofern die Unterkante der Solarzellen nicht mit der Unterkante des sie tragenden Daches übereinstimmt, ist zu empfehlen, die untere Wickelrolle nicht unmittelbar unterhalb der Unterkante der Solarzellen anzuordnen, sondern an oder nahe an der Unterkante des Daches, um bei großen Schneemengen den Schnee direkt über die Dachkante abzuwerfen.

Damit dabei die Folie durch das Gewicht des Schnees nicht zu stark belastet wird und durchhängt oder gar reißt, können Stützstege oder auch Stützseile in der Falllinie verlaufend unter der Unterseite der Folie am Dach montiert werden, um die Folie zu unterstützen.

Auch auf den Solarzellen ist dies sinnvoll, um einerseits eine leichtere Bewegung der Folie zuzulassen und andererseits ein Anfrieren der Unterseite der Folie auf den Solarzellen zu verhindern. Diese Führungselemente können auf den Solarzellen entweder entlang deren Ränder und Rahmen, aber auch in schmaler Ausführung über die Solarzellen hinweg auf den Falllinien angeordnet werden.

Als Führungselemente kommen insbesondere Lagerringe in Frage, die auf der Stange, die die Vorderkante der Folie bildet, angeordnet sind und diese Frontstange mit Hilfe der Lagerringe auf den Rändern oder Rahmen rollen kann.

Sofern keine Abstandshalter in Form von Spanngurten oder Spannseilen oder Ähnliches oder ein ausreichend großer Ausgangsabstand vorhanden ist, verhindert dies jedoch nicht, dass die Folie auf der Oberfläche der Solarzellen aufliegt und dort einerseits theoretisch festfrieren kann und andererseits beim Entlangziehen vor allem bei Feuchtigkeit eine hohe Haftreibung entwickelt, die entsprechend hohe Zugkräfte der Antriebsvorrichtung bedingt.

Um beides zu minimieren, hat es sich als vorteilhaft herausgestellt, anstelle einer glatten durchgehenden Folie eine gelochte Folie oder ein Gewebe oder eine andere Struktur mit Öffnungen zu verwenden, um vor allem die Kontaktfläche zwischen dem flächigen Zugelement und der Oberfläche der Solarzellen zu verringern.

Ein weiterer Vorteil besteht darin, dass Regen durch diese Öffnungen hindurchsickern kann und damit vermehrt Wasser zwischen Folie und Solarzellen gerät, was das Auftreten von Haftreibung verringert.

Entgegen den Erwartungen wurde die Wirksamkeit bezüglich Schneeverhinderung bzw. Schneeentfernung dadurch nicht beeinträchtigt, selbst wenn die Öffnungen so groß gewählt wurden, dass Schneeflocken theoretisch durch die Öffnungen hindurch auf die Solarzellen fallen können:

Dies dürfte zum einen daran liegen, dass sich mit der Zeit eine durchgehende Schneeschicht auf der gelochten Folie ausbildet, die bei Bewegen der Folie in Gänze mittransportiert wird und vor allem durch die Kanten der Öffnungen der eventuell auf den Solarzellen klebende Schnee weggerissen wird.

Dennoch hat sich eine Öffnungsgröße von maximal 10 mm als bevorzugt einsetzbar erwiesen.

In der Folge können die Zugseile für die Wickelrolle auch außerhalb der Breite der Folie über die Umlenkrolle zurückgeführt werden, was die Konstruktion vereinfacht und die Reibbelastung der Zugseile verringert.

Auf diese Art und Weise kann die Folie, die zunächst z. B. vorzugsweise auf der oberen Wickelrolle als Vorratsrolle aufgewickelt war, abschnittweise auf die untere Wickelrolle aufgewickelt werden und dann nach einem vollständigen Durchlauf auch wieder zurück auf die obere Wickelrolle gewickelt werden.

Anstelle der vorbeschriebenen endlichen Folie, deren Enden jeweils mit einer der Wickelrollen verbunden sind, ist auch eine endlos um die Solarzellen über obere und untere Umlenkrollen laufende Folie denkbar, wenn der Raum unterhalb der Solarzellen für das Zurückführen des einen Trumes zur Verfügung steht.

Auch damit sind alle vorgenannten Betriebsarten machbar, da das endlos umlaufende Zugelement ja nicht vollständig aus der Folie bestehen muss, sondern ein Abschnitt aus den Zugseilen bestehen kann, die die Solarzellen-Oberfläche nicht vollständig abdecken.

Eine andere Möglichkeit besteht darin, die Folie nicht permanent vor den Solarzellen zu positionieren, sondern erst dann, wenn unmittelbar mit Schneefall zu rechnen ist.

Dies kann insbesondere auch automatisch mittels eines Sensors gesteuert werden, der Schneefall feststellt. Ein solcher Sensor kann beispielsweise auch in der Kombination eines Niederschlagsensors, der auf Feuchtigkeit reagiert, kombiniert mit einem Temperatursensor, bestehen:

Schneefall bzw. die Notwendigkeit zum Aktivieren der Vorrichtung in Form eines Ausfahrens der Folie vor die Solarzellen liegt dann vor und wird automatisch eingeleitet, wenn der Niederschlagsensor Niederschläge detektiert und der Temperatursensor eine Temperatur unterhalb eines vorgegebenen Grenzwertes, z. B. unterhalb von 3° Celsius, anzeigt. Dann wird die Folie vor die Solarzellen ausgefahren und verbleibt dort beispielsweise einen festgelegten Zeitraum von 3 Stunden.

Nach diesem Zeitintervall wird die Folie eingefahren und damit der darauf abgelagerte Schnee entfernt, der sofort wieder die gleiche Überprüfung mittels Niederschlagssensor und Temperatursensor durchführt. Wenn deren Ergebnis wiederum positiv ist, wird die Folie sofort wieder ausgefahren.

Zusätzlich kann ein Windmesser vorhanden sein, der ebenfalls mit der Steuerung verbunden ist, um zu bewirken, dass bei zu starkem Wind die Folie auch bei Niederschlag nicht ausgefahren wird bzw. wieder eingefahren wird, um deren Beschädigung zu vermeiden.

Auch ein Festfrieren kann automatisch verhindert werden, indem bei Temperaturen unterhalb des Gefrierpunktes oder bei einem festgestellten schnellen Absinken der Temperatur die Folie in kürzeren Zeitabständen bewegt wird, z. B. jeweils nach einigen Minuten, wobei nur ein kurzer Bewegungsweg notwendig ist, um ein Festfrieren zu vermeiden, d. h. ein kurzes Vor- und Zurückbewegen, ohne die Folie komplett aus- oder einzufahren.

Vorzugsweise ermöglicht die Steuerung aber auch ein Umschalten auf manuellen Betrieb.

Ansonsten ist die Folie auf der Vorratsrolle aufgewickelt und die freie Vorderkante der aufgewickelten Folie ist nur über einige Wickelseile, insbesondere nur zwei seitliche Wickelseile, die sich über die Solarzellen hinweg erstrecken, mit der anderen Wickelrolle, die insbesondere die gleiche einzige Wickelrolle sein kann, verbunden.

Im Fall der Aktivierung wird die andere Wickelrolle in Aufwickelrichtung in Drehung versetzt, woraufhin zunächst die Aufwickelseile aufgewickelt werden und dabei die Vorderkante und damit der erste Abschnitt der Folie über die Solarzellen gelegt wird.

Vorteil dieser Lösung ist, dass hierfür die Folie nicht unbedingt lichtdurchlässig oder größtenteils durchlässig ausgebildet sein muss, da für die meist nur kurze Zeit des Schneefalles die komplette Deaktivierung der Solarzellen hinnehmbar ist, zumal dies nur Schneefallzeiten am Tage betrifft.

Dementsprechend kann die Folie auch aus sehr viel stärkeren und widerstandsfesteren Materialien hergestellt werden.

Der Nachteil besteht darin, dass möglichst genau vor Beginn des Schneefalles die Folie vor die Solarzellen gewickelt werden muss:

Erfolgt dies zu früh, gehen wertvolle Nutzzeiten verloren, geschieht dies zu spät, befindet sich bereits Schnee zwischen den Solarzellen und der Folie, so dass einerseits die Gefahr des Festfrierens der Folie besteht und andererseits beim wieder Entfernen der Folie die Solarzellen nicht schneefrei sind und damit der Zweck teilweise verfehlt wurde, da lediglich die Schneemenge auf den Kollektoren verringert werden konnte.

Um dies zu vermeiden, wird ein automatischer Betrieb der Vorrichtung angestrebt, in dem der Antrieb über einen Elektromotor erfolgt und dessen Steuerung mit einem Schneefallsensor gekoppelt ist, der automatisch bei beginnendem Schneefall die Folie vor die Solarzellen wickelt.

Vor allem wenn das Ziel nicht eine vollständige Freihaltung von Schnee sondern vor allem eine drastische Verringerung der Schneemenge auf den Kollektoren ist, da mit einem schnellen Abschmelzen des kleinen Restes durch Erwärmung der Solarzellen gerechnet wird, ist die Verwendung eines Gitters an Stelle einer durchgehend geschlossenen Folie eine Alternativlösung:

In diesem Fall kann das Gitter zwar ebenfalls bei Beginn des Schneefalls vor die Solarzellen gewickelt werden, der Vorteil liegt jedoch darin, dass dies gar nicht unbedingt notwendig ist, so dass auf eine manuelle Bestimmung des richtigen Zeitpunktes oder gar eine Automatisierung mittels Schneefallsensor verzichtet werden kann:

Es wird bewusst abgewartet, bis der Schneefall beendet ist oder zumindest weit fortgeschritten ist, und dann erst das Gitter mit Hilfe der Zugseile vor die Solarzellen bewegt oder ein bereits davor gewickeltes Gitter weiter nach unten bewegt.

Da sich das Gitter in sehr geringem Abstand, insbesondere unmittelbar auf der Oberseite der Solarzellen befindet, schneidet es den Schnee mit seiner Vorderkante durch und der Großteil des Schnees wird sich auf dem Gitter befinden und nach Durchtrennen der Schneeschicht, die auf den Solarzellen liegt, mit dem Gitter nach unten bewegen und auf den Solarzellen nur ein verschwindend geringer Rest zwischen Solarzellen und Gitter verbleiben.

Diese Restmenge kann weiter dadurch minimiert werden, dass an den Querstegen des Gitters nach unten vorstehende Vorsprünge, Lippen- oder Borstenreihen angeordnet sind, die nach dem Abtrag der Schneehöhen oberhalb des Gitters die Schneeschicht unterhalb des Gitters ebenfalls weitestgehend nach unten transportiert.

Eine weitere Lösung in diesem Sinne besteht darin, die Verschmutzung der Solarzellen durch Schnee hinzunehmen, und danach den Schnee von den Solarzellen automatisch abzuräumen, indem ein Querschieber mit Hilfe von Führungen entlang der Oberseite der Solarzellen vorzugsweise von deren Oberkante zu deren Unterkante und gar darüber hinaus bewegt werden kann und dabei den abgelagerten Schnee vor sich her schiebt und über die Unterkante der Solarzellen, vorzugsweise auch die Unterkante des Daches, hinweg abwirft.

Der Schieber wird vorzugsweise entlang von seitlichen Führungen geführt und mittels einer geeigneten Antriebsvorrichtung, seien es Zugseile, Zugriemen oder -ketten, geführt.

Diese Lösung ergibt unter Umständen keine 100%ige Schneefreihaltung der Solarzellen zu jedem Zeitpunkt, ist jedoch besonders einfach und robust herstellbar und wenig störungsanfällig in der Funktion.

### Darüber hinaus können weitere Detailverbesserungen vorgesehen werden:

Auch bei einer Folie können nach unten vorstehende Bürstenstreifen, Lippen oder ähnliche Schneeabstreifer zumindest an der Vorderkante der Folie, aber auch dahinter, in Abständen auch mehrfach, angeordnet werden, die flexibel genug sein können, dass sie das Aufwickeln nicht behindern.

Um bei über den Solarzellen liegender Folie ein Zerreißen bei starkem Wind zu verhindern, können die seitlichen Ränder des Zugelementes, vorzugsweise bei Verwendung durchgehend geschlossener Folien, in seitlichen Führungsschienen geführt sein, die ein Einfahren des Windes unter die Folie verhindern.

Vor allem um bei ständig vor den Solarzellen angeordneter Folie deren Beschädigung an z. B. den Kanten der Solarzellen zu vermeiden, kann deren Querbewegung durch Spanngurte oder Spannseile knapp unterhalb oder auch knapp oberhalb des Zugelementes verlaufend begrenzt werden.

Vor allem die mit einer geringen Querschnittsfläche ausgestatteten Spannseile können zusätzlich dazu benutzt werden, um Unterseite der Folie und Oberseite der Solarzellen zuverlässig auf Abstand zueinander zu halten, und deren Festfrieren gegeneinander zu verhindern.

Vor allem eine Nachrüstung bereits vorhandener Solarzellen ist auf besonders einfache Art und Weise durch einen Bausatz möglich, der die Anfertigung der Vorrichtung in den gewünschten Größen, abhängig von der Größe der Solarzellen, zulässt:

Hierbei müssen lediglich die beiden benötigten Wickelrollen bzw. Umlenkrollen auf die entsprechende Länge abgelängt werden und ebenso das Zugelement, z. B. die Folie, hinsichtlich Länge und Breite zugeschnitten und auf die Wickelrollen aufgewickelt werden.

Die Antriebsvorrichtungen werden vorzugsweise direkt an den beiden Wickelrollen angeordnet, wobei die beiden Wickelrollen mechanisch, vorzugsweise nur über das Zugelement, miteinander in Verbindung stehen und jeweils vorzugsweise nur in Aufwickelrichtung antreibbar sind, während sie in Abwickelrichtung mit einer permanent wirkenden Bremse oder Federvorspannung beaufschlagt sind, damit das Zugelement immer unter einer Vorspannung steht und damit straff gespannt ist.

Vor allem bei der Schneefreihaltung von Schneelast, d. h. ohne das dort Solarzellen vorhanden sind, kommt die Version mit einer endlos umlaufenden Folie über zwei Umlenkrollen in Frage oder auch die Version mit zwei Wickelrollen, bei der beide Ende der Folie direkt an einer der Wickelrollen befestigt ist.

Insbesondere bei einem Einsatz von Wohnwägen oder Wohnmobilen werden als Antriebsvorrichtungen dabei insbesondere Rohrmotore eingesetzt, die in der oder den Wickelrollen im Inneren montiert sind und daher nicht nach außen vorstehen und nicht beschädigt werden können.

### c) Ausführungsbeispiele

Ausführungsformen gemäß der Erfindung sind im Folgenden beispielhaft näher beschrieben. Es zeigen:
- Fig. 1:: eine perspektivische Ansicht der erfindungsgemäßen Vorrichtung,
- Fig. 2:: Seitenansichten gemäß der Erfindung,
- Fig. 3:: ein weiteres Zugelement,
- Fig. 4:: den Einsatz der Vorrichtung auf einem Flachdach
- Fig. 5:: den Einsatz bei Solarkollektoren, und
- Fig. 6:: eine bevorzugte Ausführungsform, und
- Fig. 7:: die Anwendung an einem Wohnwagen.

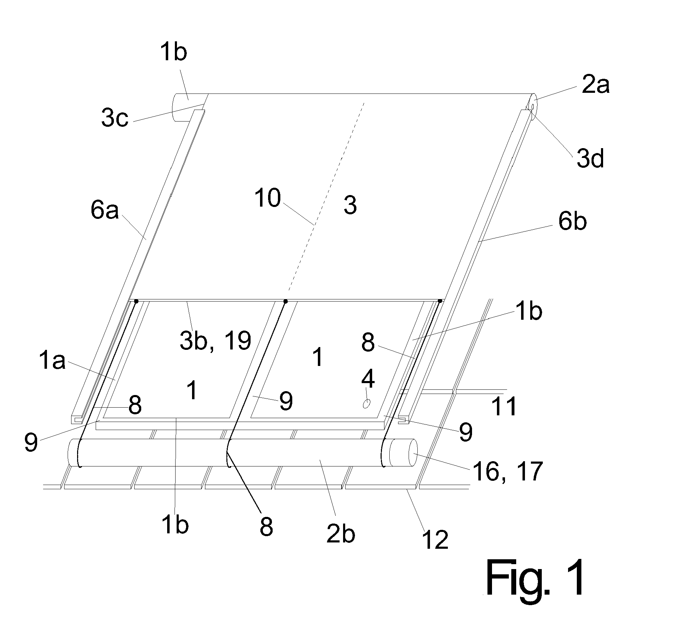

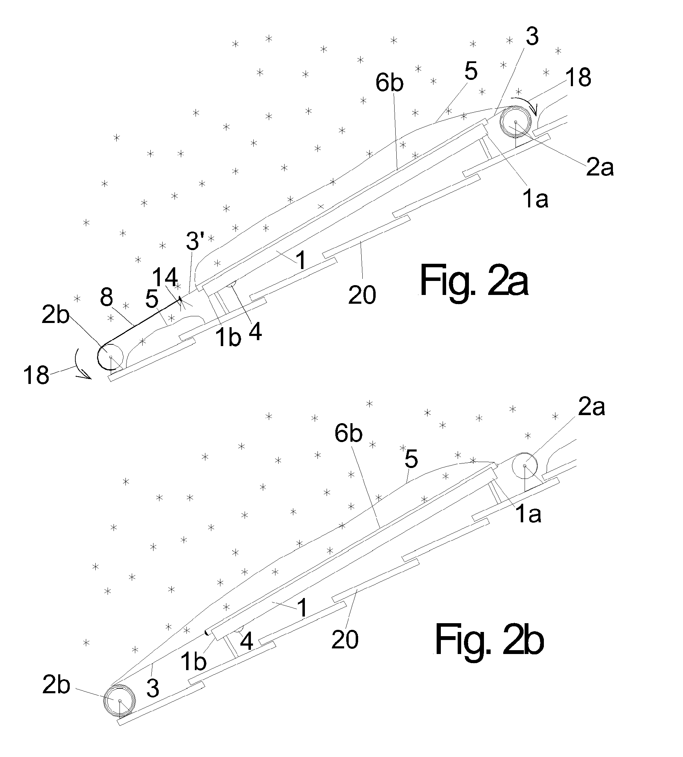

Fig. 1 sowie die dieser entsprechenden Seitenansichten der Fig. 2a und b zeigen als Grundproblem z. B. die auf einer schrägen Dachfläche 20 montierten Solarzellen 1, die von z. B. Schnee oder anderen sich darauf in größerer Anzahl ablagernden Partikeln 5 freigehalten werden sollen.

Dabei verläuft eine obere Wickelrolle 2a, die als Vorratsrolle für die darauf aufgewickelte Folie 3 dient, parallel zu und knapp oberhalb der Oberkante 1a der Solarzellen 1 und unterhalb der Unterkante 1b die untere Wickelrolle 2b.

Die untere Endkante 3b der Folie 3, die vorzugsweise mittels eines Stabes stabilisiert ist, ist gemäß Fig. 1 nicht direkt auf dem Umfang der unteren Wickelrolle 2b befestigt, sondern es führen Zugseile 8 von dieser Querleiste 19 zur unteren Wickelrolle 2b, und zwar jeweils ein Zugseil 8 nahe der seitlichen Enden der Folie 3 und je nach Breite auch dazwischen Zugseile 8, wobei die Zugseile 8 vorzugsweise so angeordnet sind, dass sie oberhalb der Rahmen 9 der einzelnen Solarzellen-Elemente 1 verlaufen.

Die Länge der Zugseile 8 ist mindestens so groß wie die Längserstreckung der Solarzellen 1 entlang der Falllinie 10, oder besser mindestens so lang wie der Abstand zwischen den Wickelrollen 2a, b, so dass im Ausgangszustand die Folie 3 vollständig auf der oberen Wickelrolle 2a aufgewickelt ist und sich die untere Endkante 3b mit der Querleiste 19 auf Höhe der Oberkante 1a der Solarzellen 1 befindet.

Die Breite der Folie 3 und damit auch der Wickelrollen 2a, b ist so bemessen, dass sie die Solarzellen 1 komplett überdecken.

Die Seitenkanten 3c, d der Folie sind dabei vorzugsweise in seitlichen Führungen 6a, b in Form von U-Schienen oder ähnlichem geführt, welche vorzugsweise nach unten zu an den Seitenwangen der Solarzellen 1 anschließen, um ein Einfahren von Wind unter die Folie 3 zu vermeiden, wenn diese vor die Solarzellen gezogen ist.

Fig. 2a zeigt weiterhin, dass die untere Wickelrolle 2b nicht unmittelbar unterhalb der Unterkante der Solarzellen 1 angeordnet ist, sondern an der Dachfläche 20 weiter unten, nämlich am unteren Ende der Dachfläche 20, so dass auf der Folie 3 abgelagerter Schnee 5 beim Transportieren der Folie nach unten nicht nur über die untere Wickelrolle 2b sondern damit gleichzeitig auch über die untere Dachkante nach unten abgeworfen wird.

Fig. 1 zeigt ferner an den Enden beider Wickelrollen jeweils einen Elektromotor 16 als Antrieb für die Rollen 2a bzw. b, die gegebenenfalls von einer automatischen Steuerung 17 angesteuert werden können, welche ihrerseits Impulse von einem Sensor 4 erhält, der in, an oder neben den Solarzellen 1 angeordnet ist und auf ihn fallende Partikel wie Schnee registriert, und dann die Vorrichtung aktiviert.

Dies bedeutet beispielsweise, dass sich im Ausgangszustand die Folie 3 vollständig auf der oberen Wickelrolle 2b aufgewickelt befindet und sich die Querleiste 19 an oder oberhalb der oberen Endkante 1a der Solarzellen 1 positioniert ist.

Registriert der Sensor 4 beginnenden Schneefall, wird die untere Wickelrolle 2b in Aufwickelrichtung 18 so lang angetrieben, bis zuerst die Zugseile 8 auf der unteren Wickelrolle 2b aufgewickelt sind und die untere Endkante 3b der Folie 3 sich mindestens am unteren Ende 1b der Solarzellen 1, besser bereits auf der unteren Wickelrolle 2b, befindet und somit die gesamte Fläche der Solarzellen 1 von Folie 3 abgedeckt ist.

Nach unten gegen die Solarzellen gerichtete Bürsten 14 an der vorderen Endkante, z. B. der Querleiste 19, kehren dabei den geringfügig bereits auf den Solarzellen liegenden Schnee nach unten ab.

Entweder nach Ende der Schneefallperiode oder bei längeren Schneefallperioden auch in Abständen während der Schneefallperiode wird die Folie 3 entweder abschnittweise oder langsam und konstant permanent nach unten bewegt durch Antreiben der unteren Wickelrolle 2b in Aufwickelrichtung, wobei die obere Wickelrolle 2a in die Gegenrichtung, also ihre eigene Aufwickelrichtung 18, vorgespannt bleibt, um die Folie 3 gespannt zu halten.

Auf der Folie 3 abgelagerter Schnee wird dadurch jeweils über die Dachkante nach unten abgeworfen und die Solarzellen nacheinander von neuen, anfangs noch nicht beschneiten Abschnitten 3', 3" der Folie 3 abgedeckt, bis - wie in Fig. 2b dargestellt - die im Wesentlichen gesamte Folie 3 auf der unteren Wickelrolle 2b aufgewickelt ist und die obere Vorratsrolle 2a vollständig abgewickelt ist.

Bevor dieser Zustand eintritt, wird der letzte Längenabschnitt der Folie 3 von der oberen Vorratsrolle 2a schnell über die Solarzellen 1 zur unteren Rolle 2b gewickelt, um den auf dem vorletzten Abschnitt der Folie liegenden Schnee abzuwerfen, und anschließend sofort, insbesondere bevor eine nennenswerte Beschneiung des letzten Abschnitts der Folie 3 stattgefunden hat, diese vollständig zurück auf die obere Vorratsrolle 2a wickeln zu können, damit die Vorrichtung wiederum sofort zum Einsatz zur Verfügung steht.

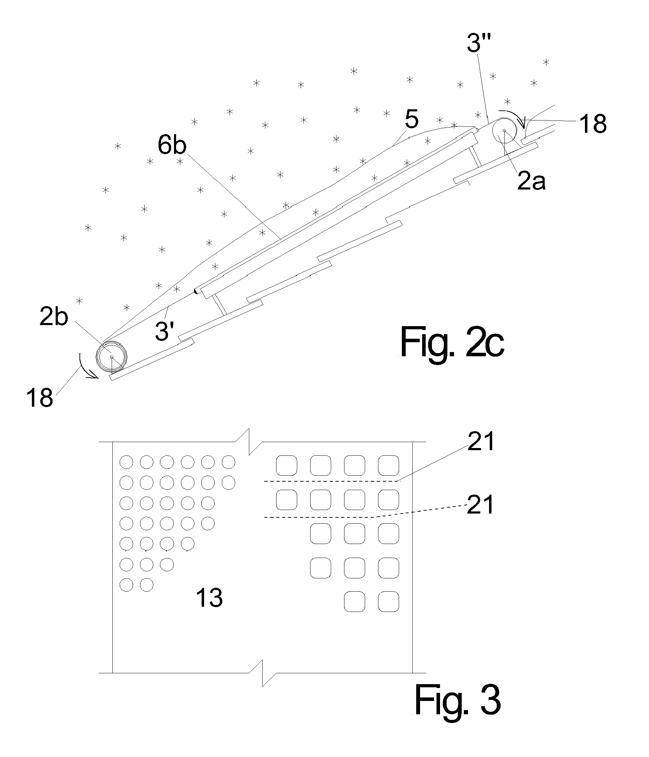

Fig. 2c zeigt eine Lösung, die sich von denjenigen der Fig. 1 und 2a, b dadurch unterscheidet, dass die Folie 3 und ihre untere Endkante 3b direkt mit der unteren Rolle 2b verbunden ist, also keine Zugseile vorhanden sind.

Dann befindet sich immer ein Abschnitt der Folie 3 vor den Solarzellen 1 mit der Folge, dass es sich hierbei um eine durchsichtige Folie 3 handeln muss, die die Funktion der Solarzellen 1 nicht beeinträchtigt.

Im Gegensatz zur Lösung der Fig. 2c kann bei der Lösung gemäß Fig. 2a, b auch bewusst eine Beschneiung der Solarzellen 1 zunächst in Kauf genommen und danach der Schnee erst entfernt werden, wobei dann anstelle einer durchgehend geschlossenen Folie 3 auch ein elastisches, wickelbares Gitter 13, also beispielsweise eine Folie mit Durchbrüchen, verwendet werden kann, wie in Fig. 3 dargestellt:

Den auf den Solarzellen 1 vorhandenen Schnee durchschneidet die untere Endkante 3b des Gitters 13 dann z. B. mit der dort vorhandenen Querleiste 19, und nachdem die untere Querleiste 19 die untere Wickelrolle 2b erreicht hat, wird der abgeschnittene obere, nun oberhalb des Gitters 13 befindliche Teil des Schnees mit dem Gitter 13 nach unten wandern und abgeworfen werden.

Anschließend wird das Gitter wieder auf die obere Wickelrolle 2a aufgewickelt und für den erneuten Einsatz bereitgehalten.

Die verbleibende geringe Schichtdicke von Schnee auf den Solarzellen 1 taut dann entweder selbsttätig in kurzer Zeit ab aufgrund der Erwärmung der Solarzellen-Oberfläche oder wurde bereits durch mehrere hintereinander an der Unterseite des Gitters angeordneten, in Querrichtung verlaufenden Bürsten 14 oder Abstreiflippen 21 abgebürstet.

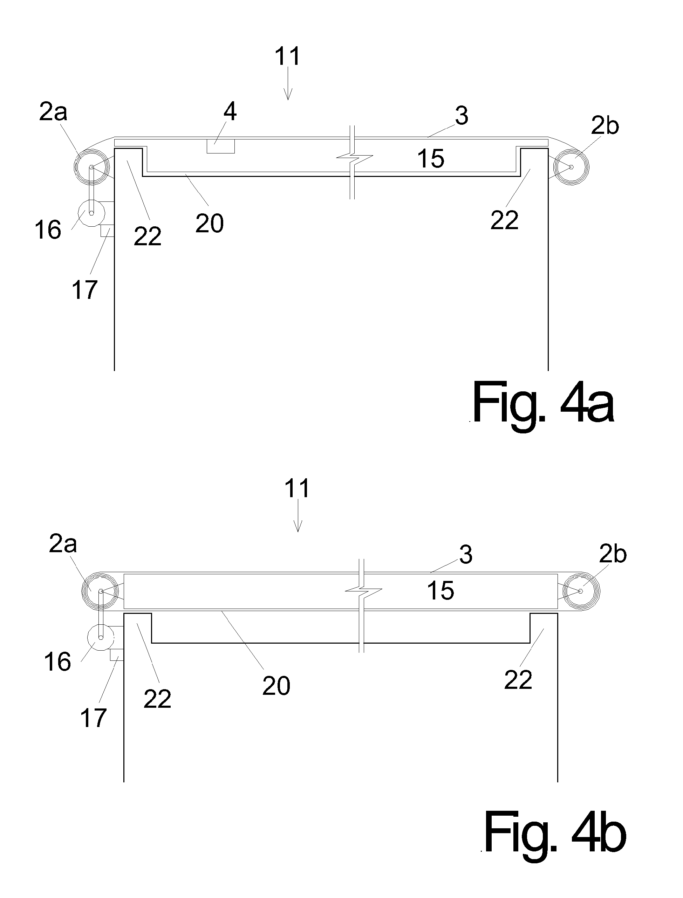

Fig. 4 zeigt den Einsatz der erfindungsgemäßen Vorrichtung, um ein Flachdach 11, welches keine Solarzellen trägt, von zu großen Schneelasten freizuhalten:

Wie in der dargestellten Seitenansicht bzw. in dem Querschnitt ersichtlich, sind solche Flachdächer meist wannenartig ausgebildet mit einem seitlich aufragenden Rand 22.

Die Wickelrollen 2a, b befinden sich bei Fig. 4a seitlich außerhalb der Ränder 22 des Daches 11 und entlang des Daches 11 verlaufen in Transportrichtung der Folie Stützstege 15 über die gesamte Dachfläche 20 einschließlich deren aufragende Ränder 22 hinweg, oder stattdessen nicht dargestellte Spanngurte oder Spannseile.

Jede der Wickelrollen 2a, b ist wiederum mittels eines Motors 16 angetrieben, die beide mit einer Steuerung 17 in Verbindung stehen, welche auch einen Sensor 4 zur Registrierung der Beschneiung umfasst.

Dagegen zeigt Fig. 4b eine Variante, bei der ein endloses Zugelement, sei es durchgehend bestehend aus Folie oder abschnittweise bestehend aus Folie und Zugseilen, auf der Oberseite des Flachdaches über zwei Umlenkrollen auf der Oberseite des Flachdaches über zwei Umlenkrollen umläuft und dazu benutzt wird, den darauf fallenden Schnee über die Seitenkante des Daches abzuwerfen.

Auf diese Art und Weise können Flachdächer - selbstverständlich auch flach geneigte Schrägdächer, Tonnendächer oder andere Dachformen - automatisch von Schnee freigehalten werden und damit eine Überlastung durch zu hoch aufsummierte Schneehöhen vermieden werden.

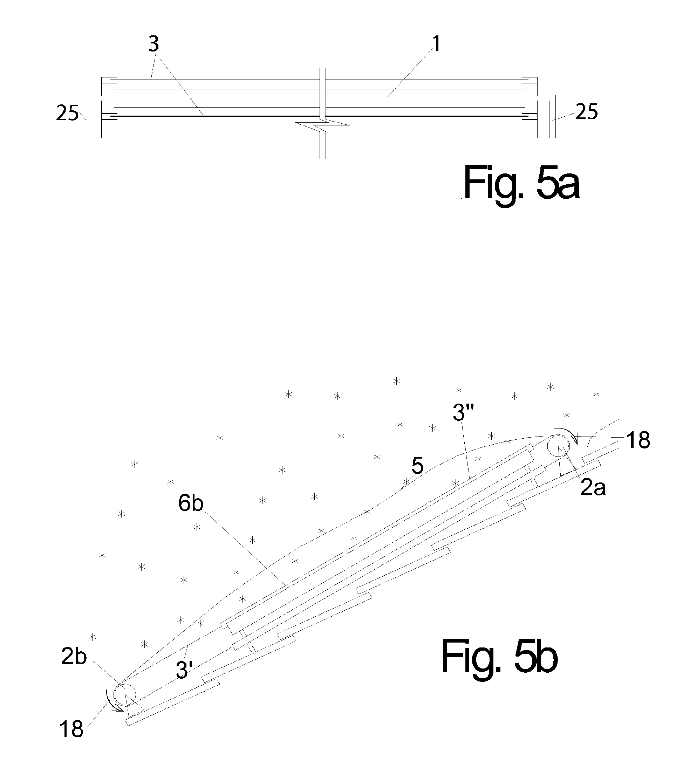

Fig. 5 zeigt eine solche Endlos-Variante auch am Einsatz bei Solarkollektoren: Vorraussetzung ist hierfür, dass das eine Trum des Zugelements unter den Solarzellen hindurch verlaufen kann, und dabei deren Aufständerung auf dem Dach nicht stört, beispielsweise indem die Aufständerung 25 seitlich auskragend sich neben den Solarzellen befindet.

Wie Fig. 5a zeigt, können analog zu den vorbeschriebenen Varianten sich Obertrum und Untertrum der Folie 3 oberhalb und unterhalb der Solarzellen verlaufen und werden über dann nur noch als Umlenkrollen fungierende Rollen 2'a und 2'b oberhalb der Oberkante und unterhalb der Unterkante der Solarzellen 1 herumgeführt, wobei in diesem Fall bei ausreichender Vorspannung der Folie auf den Umlenkrollen ein Antrieb an nur einer der Umlenkrollen ausreichend sein könnte.

Ein Verfahren zum Betreiben der erfindungsgemäßen Vorrichtung ist dadurch gekennzeichnet, dass
- bei einer undurchsichtigen Folie 3 als Zugelement die Folie 3 die Solarzellen 1 nicht bedeckt,
- bei drohender Verschmutzung der Solarzellen 1 durch Partikel 5 die Folie 3 vor die Solarzellen 1 bewegt wird und
- bei zunehmender Bedeckung, insbesondere nach dem Ende des Schneefalles, der Solarzellen 1 mit Partikeln 5 die untere Wickelrolle 2b in Aufwickelrichtung 18 angetrieben wird, bis derjenige Abschnitt 3' der Folie 3, der bisher die Solarzellen 1 bedeckt hat, über die Unterkante 1b der Solarzellen 1 aus nach unten verfahren ist und insbesondere die Partikel 5 nach unten abgeworfen hat, gegebenenfalls Rückwickeln der Folie 3 in den Ausgangszustand durch Antreiben der oberen Wickelrolle 2a in Aufwickelrichtung 18.

Ein Verfahren zum Betreiben der erfindungsgemäßen Vorrichtung ist weiterhin dadurch gekennzeichnet, dass
- bei einer durchsichtigen Folie 3 als Zugelement die Folie 3 permanent die Solarzellen 1 bedeckt und die Unterkante 1b der Folie 3 im Ausgangszustand an der Unterkante 1b der Solarzellen 1 positioniert wird,
- bei zunehmender Bedeckung der Solarzellen 1 mit Partikeln 5 die untere Wickelrolle 2b in Aufwickelrichtung 18 angetrieben wird, bis derjenige Abschnitt 3' der Folie 3, der bisher die Solarzellen 1 bedeckt hat, über die Unterkante 1b der Solarzellen 1 aus nach unten verfahren ist und insbesondere die Partikel 5 nach unten abgeworfen hat, gegebenenfalls Rückwickeln der Folie 3 in den Ausgangszustand durch Antreiben der oberen Wickelrolle 2a in Aufwickelrichtung 18.

Ein Verfahren zum Betreiben der erfindungsgemäßen Vorrichtung ist weiterhin dadurch gekennzeichnet, dass
das Rückwickeln der Folie 3 erst erfolgt, wenn die Folie 3 vollständig von der oberen Wickelrolle 2a Vorratsrolle abgewickelt ist.

Ein Verfahren zum Betreiben der erfindungsgemäßen Vorrichtung ist weiterhin dadurch gekennzeichnet, dass
der Schieber nach Ablagern von Partikeln entlang der Oberfläche der Solarzellen 1, insbesondere von oben nach unten, bewegt wird und die Partikel 5 über die Unterkante der Solarzellen 1 abführt.

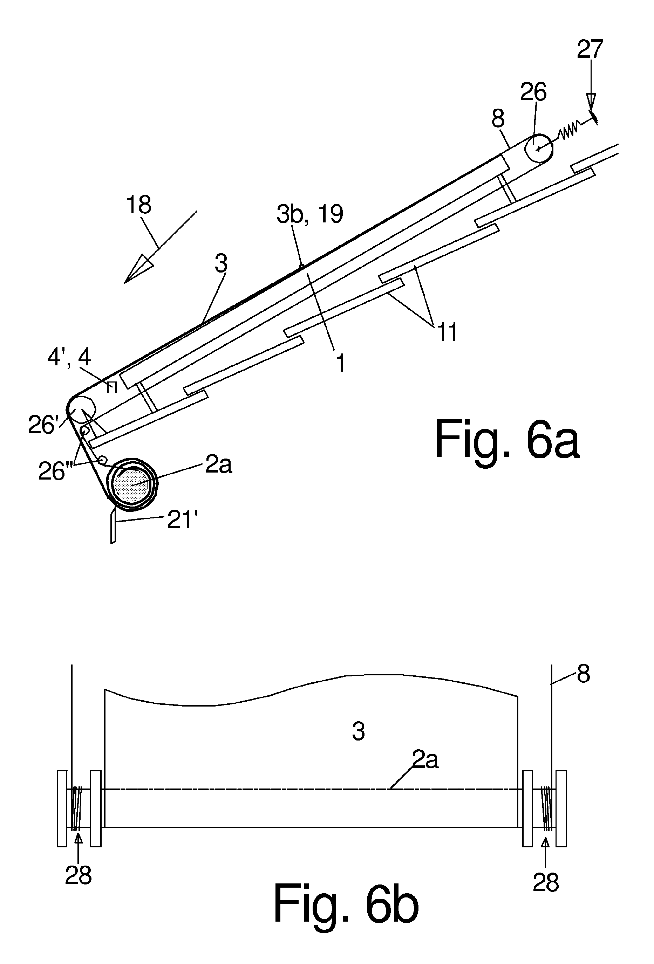

Figur 6 zeigt eine bevorzugte Ausführungsform gemäß der Erfindung, wobei Figur 6a die Seitenansicht zeigt und Figur 6b eine Aufsicht auf die Wickelrolle 2a.

Die Seitenansicht der Figur 6a zeigt, dass - im Gegensatz zu den vorher beschriebenen Lösungen - nur eine Wickelrolle 2a vorhanden ist, auf der im Ausgangszustand die Folie 3 aufgewickelt ist.

Die freie vordere Endkante 3b der Folie 3, in der Regel durch eine Querleiste 19 verstärkt und stabilisiert, ist an den in Verlaufsrichtung der Folie 3 weiterführenden, nebeneinander liegenden Zugseilen 8 an ihren äußeren Rändern befestigt, die vor der Vorderseite der Solarzellen 1 nach oben führen und über eine Umlenkrolle 26, die oberhalb der Oberkante der Solarzellen 1 angeordnet ist, herumgeführt und unterhalb der Solarzellen 1 oder neben den Solarzellen 1 zur Wickelrolle 2a zurückgeführt sind, an denen das freie Ende der Zugseile jeweils in einem Spulbereich 28 seitlich neben dem Wickelbereich für die Folie 3 befestigt ist. Auf der Wickelrolle 2a ist der Spulbereich 28 links und rechts jeweils begrenzt durch Anlaufscheiben, wie am besten in Figur 6b zu sehen ist.

Indem Zugseil 8 und Folie 3 zueinander gegensinnig auf der gleichen Wickelrolle 2a aufgewickelt werden, wird beim Abwickeln der Folie das Zugseil 8 auf der Wickelrolle 2a aufgewickelt.

Da die Folie 3 jedoch grundsätzlich übereinander gewickelt wird, das Zugseil 8 jedoch anfangs einlagig nebeneinander und erst später mehrlagig übereinander gewickelt wird und zusätzlich eine andere Dicke als die Folie 3 besitzt, entsteht bei zunehmendem Auf- und Abwickeln eine sich ändernde Gesamtlänge, die über einen Längenausgleich zwischen der Wickelrolle 2a und der oberen Umlenkrolle 26 ausgeglichen werden muss.

Zu diesem Zweck ist die obere Umlenkrolle 26, gegebenenfalls auch die untere Wickelrolle 2a und/oder eine eventuell vorhandene untere Umlenkrolle 26', in Verlaufsrichtung des Zugelementes 3 beweglich angeordnet und in eine solche Richtung vorgespannt, dass das Zugelement 3 und die Zugseile 8 ständig auf Spannung gehalten werden. Der hierfür notwendige Längenausgleich 27 kann aus einfachen Federn bestehen oder aus Gasdruckdämpfern oder ähnlichen Vorrichtungen.

Figur 6a zeigt ferner die Besonderheit, dass die Wickelrolle 2a unter dem unteren Ende des Daches 11, d. h. unter dem Dachüberstand, angeordnet ist.

Dies bedingt zusätzliche Umlenkrollen 26' und 26" für das Zugelement 3 bzw. die Zugseile 8 vor dem unteren Ende des Daches 11, um diese Elemente zu der Wickelrolle 2a hin umzulenken.

Nahe der Wickelrolle 2a ist ferner ein Abstreifer 21' angeordnet, der über die gesamte Breite des flächigen Zugelementes 3 verlaufend an diesem anliegt und beim Bewegen in Aufwickelrichtung 18 den eventuell darauf anhaftenden Schnee oder andere Verschmutzungen abstreift, damit dieser Belag nicht mit aufgewickelt wird.

Unterhalb der Unterkante der Solarzellen 1 ist ferner ein Endschalter 4' zu erkennen, der das Vorbeilaufen der vorderen Endkante 3b im Falle des Aufwickelns detektiert und dann mittels der nicht dargestellten Steuerung der Vorrichtung den Aufwickelvorgang automatisch beendet.

An gleicher Stelle kann auch der Schneefallsensor 4 angeordnet sein, der in der Regel durch einen separaten Niederschlagssensor sowie Temperatursensor realisiert ist.

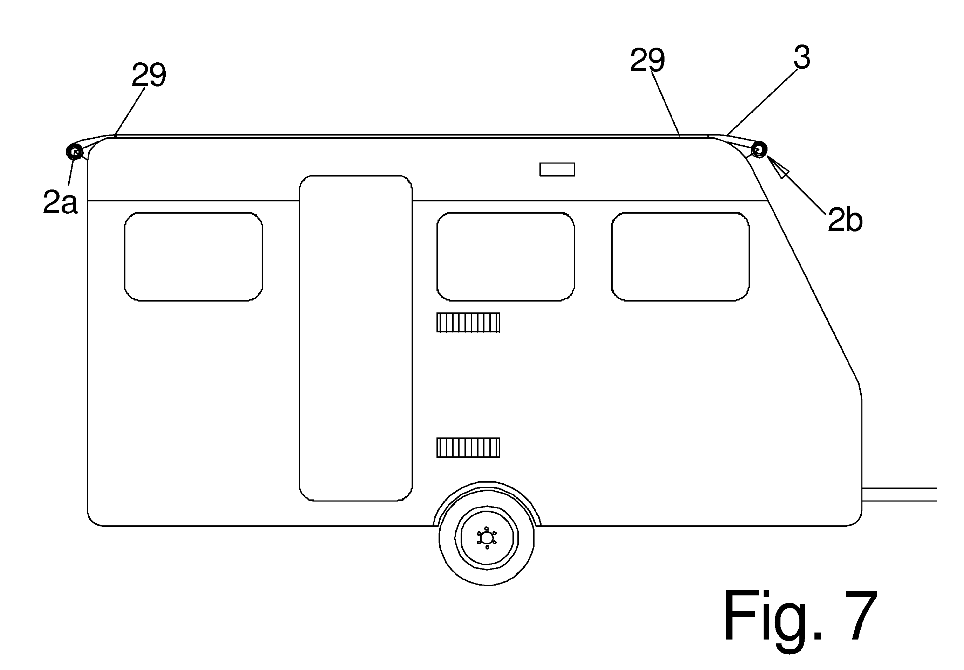

Figur 7 zeigt die Anwendung der erfindungsgemäßen Vorrichtung als Abdeckung für das Dach eines Wohnwagens:

Dabei verläuft das flächige Zugelement 3 entlang des gesamten Daches und soll so vor allem eine sich auf dem Dach des Wohnwagens aufhäufende Schneelast verhindern, indem der Schnee immer wieder automatisch vom Dach entfernt wird.

Für diese Anwendung befinden sich die beiden Rollen vor und hinter der Dachvorderkante bzw. Dachhinterkante.

Die bevorzugte Lösung wird dabei entweder ein umlaufendes flächiges Zugelement sein, so dass die beiden Rollen 2a, b dann lediglich Umlenkrollen sind, von denen mindestens eine mit einem Antrieb ausgestattet ist, oder es handelt sich um ein endliches Zugelement 3, dessen Länge allerdings deutlich größer ist als die Länge des abzudeckenden Daches und deren beide Endkanten an jeweils einer der beiden Rollen 2a, b, die dann jeweils als Wickelrollen ausgeführt sind, befestigt ist.

In diesem Fall müssen beide Wickelrollen 2a, b mit einem Antrieb ausgestattet sein, vorzugsweise in Form eines Rohrmotors in der jeweiligen Wickelwelle 2a, b. Die Folie 3 wird dann zwischen den beiden Wickelrollen hin und her gewickelt und wirft dabei den darauf zwischenzeitlich abgelagerten Schnee über eine der Endkanten des Daches ab.

### BEZUGSZEICHENLISTE

- 1: Solarzelle
- 1a, b: Seite
- 2a, b: Wickelrolle
- 3: Folie
- 3a, b: Endkante
- 3', 3": Abschnitt
- 4: Sensor
- 4': Enschalter
- 5: Partikel
- 6a, b: seitliche Führung
- 7: Spanngurt
- 8: Zugseil
- 9: Rahmen
- 10: Falllinie
- 11: Dach
- 12: unterer Rand
- 13: Gitter
- 14: Bürste
- 15: Stützsteg
- 16: Elektromotor
- 17: Steuerung
- 18: Aufwickelrichtung
- 19: Querleiste
- 20: Dachfläche
- 21': Abstreiflippe
- 22: Rand
- 23: Trennseil
- 23': Trennschieber
- 24: Schieber
- 25: Aufständerung
- 26, 26', 26": Umlenkrolle
- 27: Längenausgleich
- 28: Spulbereich
- 29: Abstandshalter

## Patentansprüche

1. Vorrichtung zum Befreien von Flächen, insbesondere Solarzellen (1), von Schnee oder Laub mit
- zwei Rollen auf einander gegenüberliegenden Seiten (1a, b) der Flächen, insbesondere Solarzellen (1),
- einem flächigen, insbesondere flexiblen Zugelement, welches mit den beiden Rollen in Verbindung steht, und
- einer Antriebsvorrichtung, die mit mindestens einer der Rollen in Verbindung steht.

2. Vorrichtung nach Anspruch 1,
**dadurch gekennzeichnet, dass**
- eine der, insbesondere beiden, Rollen Wickelrollen (2a, b) sind
- die einander gegenüberliegenden Endkanten (3a, b) des Zugelementes (3) jeweils an einer der Wickelrollen (2a, b) befestigt sind, und/oder insbesondere
- beide Enden des Zugelementes auf insbesondere der gleichen Wickelrolle befestigt sind und aufgewickelt werden und über die andere Rolle umgelenkt werden, und/oder insbesondere
- das Zugelement endlos umlaufend über die beiden Rollen geführt ist, und/oder insbesondere
- die Vorrichtung einen Sensor (4) umfasst, der die teilweise Bedeckung der Flächen, insbesondere der Solarzelle (1) mit lichtundurchlässigen Partikeln (5) detektiert.

3. Vorrichtung nach einem der vorhergehenden Ansprüche,
**dadurch gekennzeichnet, dass**
- der Sensor (4) aus der Kombination eines Niederschlagssensors und eines Temperatursensors besteht, und/oder insbesondere
- die Vorrichtung weiterhin einen Windmesser umfasst, und/oder insbesondere
- die Rollen (2a, b) entlang der oberen und unteren Kante (1a, b) von schrägen oder vertikalen Solarzellen (1) angeordnet sind, insbesondere oberhalb der oberen Kante (1a) und unterhalb der unteren Kante (1b) und das Zugelement vor den Flächen, insbesondere den Solarzellen verläuft, und/oder insbesondere
- das Zugelement in geringem Abstand oder in Berührung vor den Flächen, insbesondere den Solarzellen, verläuft.

4. Vorrichtung nach einem der vorhergehenden Ansprüche,
**dadurch gekennzeichnet, dass**
- das Zugelement durch seitliche Führungen (6a, b) und/oder durch Spanngurte / Spannseile (7) zwischen den Solarzellen (1) und dem Zugelement auf Abstand zur Fläche, insbesondere der Solarzelle (1) gehalten wird, und/oder insbesondere
- wenigstens die vordere Endkante (3) des Zugelementes durch eine wenigstens eigenstabile Stange gebildet wird, die insbesondere mit Hilfe von Lagerringen beim Bewegen entlang der Solarzellen auf deren Randprofilen abrollt und insbesondere zusätzlich an ihren seitlichen Enden in den seitlichen Führungen (6a, b) geführt wird, und/oder insbesondere
- das Zugelement eine durchsichtige Folie (3) aus Kunststoff ist, und/oder insbesondere
- das Zugelement ein Gitter (13) oder ein Gewebe, insbesondere aus Kunststoff, ist und insbesondere die Öffnungen im Gewebe einen maximalen Durchmesser von 10 mm, insbesondere von 5 mm, insbesondere von 3 mm, insbesondere von 2mm, aufweisen.

5. Vorrichtung nach einem der vorhergehenden Ansprüche,
**dadurch gekennzeichnet, dass**
- das flächige Zugelement an einer seiner Endkanten (3a, b), insbesondere der oberen Endkante (3b), mit der Wickelrolle indirekt, insbesondere über Zugseile (8a, b), verbunden ist, und/oder insbesondere
- die Zugseile (8a, b) und/oder Spanngurte (7) entlang der inaktiven Randbereiche beziehungsweise seitlichen Rahmen (9) der Solarzellen (1) oder außerhalb davon verlaufen, und/oder insbesondere
- die untere Wickelrolle (2b) am unteren Rand (12) des Daches (11) unterhalb der Solarzellen (1) angeordnet ist und insbesondere die untere Wickelrolle unterhalb des Dachüberstandes, auf dem die Solarzellen angeordnet sind, mit einer zusätzlichen Umlenkrolle für das Zugelement vor der Dachunterkante positioniert ist, und/oder insbesondere
- das Zugelement quer verläuft und die Wickelrollen (2a, b) links und rechts der Flächen, insbesondere der Solarzellen (1) angeordnet sind.

6. Vorrichtung nach einem der vorhergehenden Ansprüche,
**dadurch gekennzeichnet, dass**
- entlang der Unterkante des flächigen Zugelementes eine auf den Flächen, insbesondere den Solarzellen aufsitzende Bürste (14) über die gesamte Breite angeordnet ist, und/oder insbesondere
- zwischen dem unteren Ende (1b) der Solarzellen (1) und der unteren Wickelrolle (2b) Stützstege (15) und/oder Spanngurte (7) beziehungsweise Spannseile auf der Dachfläche (20) angeordnet sind, die die Unterseite des flächigen Zugelementes abstützen, und/oder insbesondere
- das flächige Zugelement eine Länge aufweist, die der einfachen Erstreckungslänge der Solarzellen (1), insbesondere einem Mehrfachen der Erstreckungslänge der Solarzellen (1), entspricht, und/oder insbesondere
- die beiden Wickelrollen (2a, b) mechanisch, insbesondere über eine Kette, Zahnriemen, oder eine Welle, von einer gemeinsamen Antriebsvorrichtung aus wahlweise antreibbar sind.

7. Vorrichtung nach einem der vorhergehenden Ansprüche,
**dadurch gekennzeichnet, dass**
- die Antriebsvorrichtung ein Elektromotor (16) ist, dessen Steuerung (17) mit dem Sensor (4) verbunden ist und die Vorrichtung automatisch betreibt, und/oder insbesondere
- die Vorrichtung einen Längenausgleich für das Zugelement umfasst und insbesondere wenigstens eine der Umlenkrollen, insbesondere die obere Umlenkrolle, in Verlaufsrichtung des Zugelementes beweglich angeordnet und mit einer Vorspanneinrichtung versehen ist, und/oder insbesondere
- die Vorspanneinrichtung ein Gasdruckstoßdämpfer, eine Feder und/oder eine gewichtsbeaufschlagte Schwinge ist, und/oder insbesondere
- ein Abstreifer (21') an der Wickelrolle angeordnet ist und beim Aufwickeln des Zugelementes auf der Außenseite des Zugelementes abgelagerten Schnee abstreift.

8. Vorrichtung nach einem der vorhergehenden Ansprüche,
**dadurch gekennzeichnet, dass**
- der Abstreifer (21') auf dem Zugelement anliegt und gegen dieses vorgespannt ist. und/oder insbesondere
- eine Steuerung vorhanden ist, die mit dem Sensor (4), dem Antriebsmotor und insbesondere einem Windmesser in Verbindung steht, und/oder insbesondere
- zwischen dem flexiblen Zugelement und der Oberseite der Solarzellen (1) ein Trennelement angeordnet oder einbringbar ist, insbesondere ein quer verlaufendes, in Bewegungsrichtung des Zugelementes bewegbares und antreibbares Trennseil (23) oder ein Trennschieber (23'), die ebenfalls in seitlichen Führungen (6'a, b) geführt sein können.

9. Vorrichtung zum Befreien von Flächen, insbesondere Solarzellen (1), von Schnee oder Laub mit
- wenigstens einem Schieber (24), der entlang der Oberseite der Solarzellen (1) bewegbar ist zum Abstreifen darauf abgelagerter Partikel (5) und
- einer Antriebsvorrichtung für den Schieber (24), und/oder insbesondere
- die Frontstange ein Hohlrohr ist und mit einer Wasserzuführung, insbesondere einem Schlauch in Verbindung steht, sowie Austrittsöffnungen, insbesondere Düsen, nach unten in Richtung der Solarzellen aufweist, und/oder insbesondere
- das flächige Zugelement eine Abfolge von miteinander verbundenen, insbesondere aneinander anschließenden Platten oder Lamellen ist.

10. Bausatz für eine Vorrichtung zum Befreien von Flächen, insbesondere Solarzellen (1), von Schnee oder Laub mit
- Wickelrollen (2a, b) verschiedener Länge,
- einem flexiblen, flächigen Zugelement, dessen einander gegenüberliegende Endkanten an je einer der Wickelrollen befestigt sind, sowie
- einer Antriebsvorrichtung, die mit beiden Rollen verbindbar ist, und/oder insbesondere
- der Bausatz Umlenkrollen verschiedener Länge und/oder Längenausgleichsvorrichtungen umfasst.

11. Verwendung der Vorrichtung gemäß einem der vorhergehenden Ansprüche zum Schneefreihalten von Flachdächern und Tonnendächern von Gebäuden als auch von Fahrzeugen, insbesondere Wohnwägen und Wohnmobilen.

12. Verfahren zum Steuern der Vorrichtung nach einem der vorhergehenden Ansprüche,
**dadurch gekennzeichnet, dass**
die Steuerung die Vorrichtung wie folgt automatisch steuert:
- im Ruhezustand ist das Zugelement auf der Wickelrolle aufgewickelt, so dass die von Verschmutzungen zu schützenden Flächen, insbesondere Solarzellen, nicht verdeckt sind,
- falls der Sensor (4) Schneefall detektiert, insbesondere indem ein Niederschlagsensor Niederschlag detektiert und ein Temperatursensor eine Temperatur unterhalb eines Schwellenwertes, insbesondere 3° Celsius, detektiert, wird die Antriebsvorrichtung in Gang gesetzt und das Zugelement ausgefahren, bis die zu befreiende Fläche überdeckt ist,
- nach einem vorgegebenem Zeitintervall, dessen Länge insbesondere davon abhängen kann, ob der Temperatursensor eine Temperatur unterhalb des Gefrierpunktes detektiert oder einen starken Temperaturabfall detektiert, wird das flächige Zugelement wieder auf die Vorratsrolle aufgewickelt, und
- unmittelbar nach Beenden der Aufwicklung abhängig vom aktuellen Ergebnis des Sensors, insbesondere des Niederschlagssensors und Temperatursensors, das flächige Zugelement erneut ausgefahren wird.

13. Verfahren nach einem der vorhergehenden Ansprüche,
**dadurch gekennzeichnet, dass**
- bei Temperaturen unterhalb des Gefrierpunktes oder starkem Temperaturabfall das flächige Zugelement in kurzen Zeitabständen kurze Strecken vor und zurück gefahren wird, um ein Festfrieren zu verhindern, und/oder insbesondere
- bei durch den Windmesser festgestellter Windgeschwindigkeit oberhalb eines eingestellten Schwellwertes die Vorrichtung im Ruhestand deaktiviert verbleibt, bzw. das flächige Zugselement in den Ruhezustand aufgewickelt wird.
